# EUROPÄISCHE PATENTSCHRIFT

(11) **EP 1 762 461 B1**
(45) Veröffentlichungstag und Bekanntmachung des Hinweises auf die Patenterteilung: **29.09.2010**
(21) Anmeldenummer: 06017108.9
(22) Anmeldetag: 17.08.2006
(51) Int. Cl.: B62B 7/14

(54) **Tragetasche für ein Kind oder eine Puppe sowie Kinder-oder Puppenwagen**
Carrier bag for a child or a doll as well as a pram or a doll's pram
Sac pour un enfant ou une poupée ainsi qu'une poussette ou une voiture de poupée

(30) Priorität: 07.09.2005 DE 202005014143 U
(43) Veröffentlichungstag der Anmeldung: 14.03.2007
(73) Patentinhaber: Hartan Kinderwagenwerk e.K., 96242 Sonnefeld-Gestungshausen (DE)
(72) Erfinder: Hartan, Rolf, 96242 Sonnefeld (DE)
(74) Vertreter: Blaumeier, Jörg

(56) Entgegenhaltungen:
- EP-A- 1 493 361
- FR-A- 1 114 621
- GB-A- 1 169 518
- GB-A- 2 139 505
- US-A- 3 096 917

## Beschreibung

Die Erfindung betrifft eine Tragetasche für ein Kind oder eine Puppe mit einem Rahmengestell und einer Bodenplatte sowie einen zugehörigen Kinder- oder Puppenwagen, wobei mehrere seitliche Stützelemente zur Beabstandung der unteren Bodenplatte von einem oberen, im Wesentlichen bodenparallelen Rahmenabschnitt in einem aufgebauten Zustand der Tragetasche vorgesehen sind.

Derartige Tragetaschen für Kinder dienen hauptsächlich dazu, ein Kind über eine meist kürzere Strecke zu transportieren, beispielsweise zwischen der Wohnung oder einem anderen Gebäude und einem in der Nähe abgestellten Pkw. Daneben gibt es Tragetaschen, die mit Kinderwagengestellen verbunden werden können und so die Funktionalität des Kinderwagens erweitern. Die Tragetaschen werden jedoch aufgrund ihrer speziellen Anwendungsweise nicht immer benötigt, um das Kind aufzunehmen, da dieses beispielsweise bei einer Fahrt in einem Pkw auf einem eigens dafür vorgesehenen Autositz Platz nehmen kann, so dass die Tragetasche für die Dauer der Fahrt nicht benötigt wird. Dann tritt jedoch das Problem auf, dass die Tragetasche bzw. der gesamte Kinderwagen, von dem die Tragetasche einen Teil bildet, einen vergleichsweise großen Platzbedarf hat und sich zum Beispiel in kleineren Pkws nur schwer verstauen lässt.

Sofern es Überlegungen gibt, für derartige Tragetaschen eine platzsparende Aufbewahrung zu ermöglichen, so beschränken sich die bisherigen Möglichkeiten entweder darauf, dass der Tragebügel von der senkrechten Trageposition in eine horizontale Position umgelegt werden kann, oder aber es ist ein vergleichsweise kompliziertes Auseinanderbauen und nachfolgend für die erneute Verwendung der Tragetasche ein wieder vergleichsweise kompliziertes Zusammenbauen erforderlich, das zudem viel Zeit in Anspruch nimmt.

Eine zusammenlegbare Tragetasche, gemäß dem Oberbegriff des Anspruchs 1, die die eingangs genannten Merkmale zeigt, ist aus GB-A-2 139 505 bekannt. Die dort beschriebene Tasche umfasst einen unteren und einen oberen Rahmen, wobei auf dem unteren Rahmen eine Bodenplatte aufgelegt ist. An den beiden Rahmen sind vier Stützstreben schwenkbar angelenkt, die die beiden Rahmen in der aufgefalteten Taschenstellung voneinander beabstanden, worüber auch die Bodenplatte bezüglich des oberen Rahmens beabstandet wird.

Ferner ist aus EP-A-1 493 361 eine zusammenlegbare Tragetasche bekannt, bei der ein oberer Rahmen und eine untere Bodenplatte vorgesehen ist, die in der aufgeklappten Taschenstellung über Stützstreben voneinander beabstandet sind. Die Stützstreben sind nach Art eines Kniegelenks aus zwei gelenkig miteinander verbundenen Teilen aufgebaut und können im Bereich ihrer Mitte zum Zusammenklappen verschwenkt werden.

Der Erfindung liegt damit die Aufgabe zugrunde, eine diesbezüglich verbesserte Tragetasche anzugeben.

Zur Lösung dieser Aufgabe ist eine Tragetasche für ein Kind oder eine Puppe mit einem Rahmengestell und einer Bodenplatte vorgesehen, wobei mehrere seitliche Stützelemente zur Beabstandung der unteren Bodenplatte von einem oberen, im Wesentlichen bodenparallelen Rahmenabschnitt in einem aufgebauten Zustand der Tragetasche vorgesehen sind, wobei sich die Tragetasche erfindungsgemäß dadurch auszeichnet, dass die seitlichen, am Rahmenabschnitt schwenkbar angelenkten Stützelemente zum flachen Zusammenlegen der Tragetasche durch Hochdrücken der Bodenplatte jeweils mit Hilfe von Verbindungsmitteln zwischen der Unterseite der Bodenplatte und en Stützelementen in eine im Wesentlichen bodenparallele Position unterhalb der Bodenplatte bringbar sind.

Es ist also eine Tragetasche vorgesehen, deren Höhe im aufgebauten Zustand durch seitliche Stützelemente bestimmt wird, die einen oberen Rahmenabschnitt, der im Wesentlichen umlaufend ausgebildet sein kann, über Verbindungsmittel mit einem Bodenelement verbinden. Die seitlichen Stützelemente sind schwenkbar am oberen Rahmenabschnitt angelenkt, so dass sie beim Hochdrücken der Bodenplatte durch eigens hierfür vorgesehene Verbindungsmittel, die die Unterseite der Bodenplatte mit den seitlichen Stützelementen verbinden, in ihrer Lage relativ zum oberen Rahmen und zum Boden so verändert werden, dass sie hinterher im zusammengelegten Zustand praktisch flach an der Unterseite der Bodenplatte anliegen bzw. nur einen geringen Abstand zu dieser aufweisen. Wenn die seitlichen Stützelemente derart flach bzw. nur mit einem geringen Abstand an der Bodenplatte anliegen, bedeutet dies, dass die Bodenplatte selbst und der Rahmenabschnitt durch den Teil der Stützelemente, die jetzt beinahe bodenparallel angeordnet sind, nicht länger in einem Abstand zueinander gehalten werden, so dass sich eine sehr flache Anordnung ergibt, die problemlos beispielsweise in einem Pkw verstaut werden kann.

Die Stützelemente sind im zusammengelegten Zustand im Wesentlichen bodenparallel angeordnet, im Gegensatz zur vorher im Wesentlichen senkrechten Position. Der Begriff "bodenparallel" ist hier im weiteren Sinne zu verstehen, so dass z. B. hiermit durchaus noch eine Neigung von etwa 10° bzw. wenigen Zentimetern über die Länge der Stützelemente gegenüber dem Boden erfasst wird.

Um diese flache, zusammengelegte Konstruktion zu erhalten, ist es lediglich erforderlich, das Bodenelement der Tragetasche hochzudrücken, wodurch über eigens hierzu vorgesehene Verbindungsmittel von der Bodenplatte zu den Stützelementen das Verschwenken der Stützelemente und damit das Zusammenlegen der Gesamtkonstruktion ohne weitere Handgriffe erreicht wird. Die Bodenplatte kann z. B. aus einem Holz- oder Fasermaterial bzw. aus einem Kunststoff mit wärmeisolierenden Eigenschaften oder dergleichen bestehen.

Wenn die zusammengelegte Tragetasche erneut aufgebaut werden soll, lässt sich dies ebenfalls einfach dadurch realisieren, dass die Bodenplatte nun in die entgegengesetzte Richtung nach unten bewegt wird, so dass die seitlichen Stützelemente wieder in ihre Ausgangsposition zurück verschwenkt werden und eine Beabstandung zwischen dem oberen Rahmenabschnitt und der unteren Bodenplatte gewährleisten.

Insgesamt lässt sich so die Tragetasche durch eine Druckbewegung auf die Bodenplatte auf einfache Art und Weise sehr flach zusammenlegen und wieder erneut aufbauen. Dabei sind zum Erreichen der kompakten zusammengelegten Form keine weiteren zeitaufwändigen oder komplexen Schritte wie beispielsweise ein Abschrauben einzelner Elemente oder dergleichen erforderlich. Zudem bietet die Art des Zusammenlegens, die bei der erfindungsgemäßen Tragetasche vorgesehen ist, den Vorteil, dass die Verbindung zwischen dem oberen Rahmenabschnitt und der Bodenplatte durch die seitlichen Stützelemente weiterhin besteht, so dass keine Einzelteile entstehen, die schnell verloren gehen könnten bzw. separat anderswo aufbewahrt werden müssen.

Erfindungsgemäß kann wenigstens ein seitliches Stützelement ein nahe am oberen Rahmenabschnitt vorgesehenes Schwenkmittel in Form eines Gelenkelements zur Anlenkung am Rahmenabschnitt aufweisen, mittels dem ein unterer Teil des Stützelements zum Zusammenlegen um eine im Wesentlichen zum anliegenden Rahmenabschnitt parallele Achse in die bodenparallele Position verschwenkbar ist. Die Stützelemente können somit alle oder teilweise so ausgebildet sein, dass nahe am oberen Rahmenabschnitt ein Gelenkelement ausgebildet wird, beispielsweise in Form eines Ovalrohrgelenks, das einen oberen Abschnitt aufweist, der um ein Ovalrohr des anliegenden Rahmenabschnitts geführt werden kann. Direkt unterhalb dieses Teils, der auf das Ovalrohr des Rahmenabschnitts aufgeschoben wird, kann sich der eigentliche Gelenkabschnitt befinden, über den eine Verschwenkung des unteren Teils des Stützelements um eine Achse parallel zum anliegenden Rahmenabschnitt und damit um eine Achse parallel zum Boden bzw. zur Bodenkante, zu der der untere Teil des Stützelements führt, ermöglicht wird. Hierzu kann das Gelenkelement jeweils einen linken und einen rechten, gegebenenfalls im Wesentlichen spiegelsymmetrischen Teil aufweisen, die über einen Niet bzw. einen Stift in Achsrichtung, der eine entsprechende Öffnung des zu verschwenkenden unteren Teils des Stützelements durchgreift, mit diesem verbunden werden, so dass die Verschwenkung möglich wird.

Die Verbindungsmittel können zur Ausbildung eines Schiebemechanismus mit einem seitlichen Stützelement wenigstens ein Schiebeelement aufweisen, das schwenkbar an der Unterseite der Bodenplatte angelenkt und zum Zusammenlegen mit dem seitlichen Stützelement in Richtung zum oberen Rahmenabschnitt verschiebbar verbunden ist. Für die Ausbildung eines Schiebemechanismus, durch den die seitlichen Stützelemente jeweils relativ zu den Verbindungsmitteln verschoben werden, ist vorteilhafterweise auch hinsichtlich der Verbindungsmittel eine Verschwenkbarkeit vorzusehen, so dass die Relativbewegung zwischen dem Stützelement und den Verbindungsmitteln durch eine flüssige Bewegung beim Hochdrücken der Bodenplatte erreicht werden kann, selbst wenn die Druckausübung nicht ganz gleichmäßig erfolgt bzw. die Begrenzungen von Boden und oberem Rahmenabschnitt nicht deckungsgleich sind. Zur Ausbildung des Schiebemechanismus ist das Schiebeelement der Verbindungsmittel so mit dem seitlichen Stützelement verbunden, dass es an diesem entlang in Richtung zum oberen Rahmenabschnitt hin verschoben werden kann.

Vorteilhafterweise kann das Schiebeelement einen Profilgleiter zum Eingreifen in ein Profil des seitlichen Stützelementes und ein auf der Unterseite der Bodenplatte befestigtes, insbesondere strebenförmiges, Halterungselement aufweisen, mit dem der Profilgleiter um eine parallel zum anliegenden Rand der Bodenplatte angeordnete Achse schwenkbar verbunden ist. Das Schiebeelement ist hierbei also in dem Sinne zweiteilig aufgebaut, dass ein Halterungsabschnitt vorgesehen ist, der in Form einer Strebe an der Unterseite der Bodenplatte befestigt ist. Diese Strebe ist so befestigt, dass sie sich vom Randbereich in Richtung zur Mitte der Bodenplatte hin erstreckt, wobei das Halterungselement sich tatsächlich bis zur Mittellinie der Bodenplatte erstrecken kann oder auch deutlich kürzer ausgebildet sein kann, beispielsweise derart, dass lediglich zwei Drittel oder die Hälfte der Strecke zur Mittellinie der Bodenplatte oder ein noch kürzerer Bereich erfasst werden. Die Strebe kann also senkrecht zum nächsten Rand der Bodenplatte verlaufen. Der zweite Teil des Schiebeelements ist der gegenüber der Strebe und damit der Bodenplatte dreh- bzw. schwenkbare Gleiter.

Zweckmäßigerweise weist das Stützelement zur Ausbildung des Schiebemechanismus ein Profil zur wenigstens teilweisen Aufnahme des Schiebeelements auf. In dem Profil wird vorteilhafterweise der hinsichtlich der Bodenplatte verschwenkbare Teil des Schiebeelements, also beispielsweise der Profilgleiter, teilweise aufgenommen, so dass das Schiebeelement in diesem Bereich in dem Profil des seitlichen Stützelements geführt wird. Das Profil kann dabei beispielsweise als Nut oder Rinne oder dergleichen ausgebildet sein. Je nach Schiebeelement können auch parallele Rinnen oder Vertiefungen zur Führung des Schiebeelements vorgesehen sein.

Das Profil des Stützelements kann als doppelt hinterschnittene Nut zur Aufnahme eines darin geführten T-förmigen Gegenprofils des Schiebeelements, insbesondere des Profilgleiters, ausgebildet sein. Über eine doppelt hinterschnittene Nut im Zusammenspiel mit einem T-förmigen Gegenprofil lässt sich eine besonders sichere Führung zur Ausbildung des Schiebemechanismus erreichen, bei der ein Herausrutschen des Gegenprofils oder eine unsaubere Führung beispielsweise durch Verhaken oder dergleichen wirksam vermieden werden.

Für die Längsseiten und/oder für die Querseiten der Tragetasche kann jeweils wenigstens ein seitliches Stützelement vorgesehen sein, insbesondere jeweils zwei seitliche Stützelemente an den Längsseiten oder jeweils zwei seitliche Stützelemente an den Längsseiten und jeweils ein seitliches Stützelement an den Querseiten. Es sind also verschiedene Kombinationen für die Anordnung seitlicher Stützelemente zwischen Boden und oberem Rahmenabschnitt möglich, wobei sich eine symmetrische Anordnung an gegenüberliegenden Seiten anbietet, um die Stabilität der Konstruktion zu fördern. An den Längsseiten sind vorteilhafterweise jeweils zwei Stützelemente vorgesehen, wobei eine solche Konstruktion durch jeweils ein zusätzliches Stützelement an den gegenüberliegenden Querseiten zusätzliche Stabilität erhalten kann. Dies kann beispielsweise bei einer Stoff- oder Wannenkonstruktion wichtig sein, die durch die bzw. mit Hilfe der seitlichen Stützelemente aufgespannt oder getragen wird und dazu dient, das Kind oder die Puppe aufzunehmen.

Wenn zwei seitliche Stützelemente an den Längsseiten vorgesehen sind, so werden diese zweckmäßigerweise so angeordnet, dass ihre Befestigungen am oberen Rahmenabschnitt bzw. bodennah an den Verbindungsmitteln äquidistant zur Mitte der Längsseite angeordnet sind. Je nach Ausbildung der seitlichen Stützelemente bzw. je nach den Größenverhältnissen der Tragetasche können Stützelemente an den Querseiten vorgesehen sein bzw. zusätzliche Stützelemente sowohl an den Querseiten als auch an den Längsseiten in geeigneten Abständen hinzugefügt werden, um die Stabilität zu verbessern.

Wenigstens ein Stützelement kann als Strebe, insbesondere als schräg von der Bodenplatte weg nach oben außen verlaufende Strebe, ausgebildet sein. Die Ausbildung der Stützelemente als Streben ermöglicht eine materialsparende und leichte Ausbildung der Tragetasche, da so für die Stützelemente vergleichsweise dünne Kunststoff- oder Leichtmetallstreben verwendet werden können. Zusammen mit der Verwendung eines leichten oberen Rahmenabschnitts beispielsweise aus Aluminium und eines entsprechenden Tragebügels wird so eine leichte Gesamtkonstruktion erreicht, wodurch das Mitführen der Tragetasche vereinfacht wird. Wenn die Stützelemente schräg von der Bodenplatte weglaufen, ermöglicht dies ein Zusammenlegen derart, dass nahe am oberen Rahmenabschnitt vorgesehene Schwenkmittel in der zusammengelegten Position so angeordnet sind, dass sie neben der Bodenplatte zum Liegen kommen bzw. seitlich von der Bodenplatte niedriger als diese angeordnet werden können, wenn der obere Rahmenabschnitt mit einem größeren Innenbereich derart ausgebildet ist, dass die Bodenplatte vollständig innerhalb dieses Rahmenbereichs aufgenommen werden kann. Der äußere Rahmenabschnitt bietet dabei eine große Öffnung, damit das Kind bequem in die aufgebaute Tragetasche gelegt werden kann. Dann sind gegebenenfalls vorgesehene Schwenkgelenke so angeordnet, dass sie nach unten ein wenig aus der Konstruktion herausragen, wenn die Tragetasche zusammengelegt ist, während die Bodenplatte und der obere Rahmenabschnitt in einer Seitenansicht vollständig ineinander liegen. Dadurch ergibt sich eine sehr flache Anordnung, die wenig Stauraum benötigt.

Erfindungsgemäß können Arretiermittel zum Arretieren der seitlichen Stützelemente im aufgebauten und/oder zusammengelegten Zustand der Tragetasche vorgesehen sein. So können beispielsweise seitliche Streben als Stützelemente im zusammengelegten Zustand in ihrer bodenparallelen Position gehalten werden, indem ihre Endbereiche in entsprechenden Vorsprüngen gehaltert werden, die hierzu am Boden angebracht sind. Darüber hinaus können die Schwenkmechanismen an den seitlichen Stützelementen nahe des oberen Rahmenabschnitts sowie an den Verbindungselementen gegebenenfalls durch Sperren sicherbar sein, um ein Auseinanderfallen der zusammengelegten Konstruktion bzw. ein versehentliches Zusammenlegen zu verhindern. Dies kann über einfache mechanische Elemente erreicht werden, die ein Verschwenken verhindern. Außerdem ist es möglich, über Elemente, die in ein entsprechendes Profil der seitlichen Stützelemente für einen Schiebemechanismus eingedrückt werden, eine Relativverschiebung von Verbindungsmitteln zu den seitlichen Stützelementen verhindern. Solche oder anders ausgebildete Arretiermittel können an allen oder einigen seitlichen Stützelementen bzw. den Verbindungsmitteln vorhanden sein, falls eine Arretierbarkeit gewünscht wird oder erforderlich ist.

Mehrere seitliche Stützelemente können zur Stabilisierung über wenigstens eine Querverstrebung miteinander verbunden sein. Über die Querverstrebung werden beispielsweise zwei seitliche Stützelemente an den Längsseiten der Tragetasche in ihrem Relativabstand zueinander gehalten bzw. gesichert, so dass beispielsweise beim Zusammenlegen ein Schiebemechanismus betätigt werden kann, ohne dass es zu Schwierigkeiten dadurch kommt, dass beispielsweise die Relativverschiebung zwischen den Verbindungsmitteln und dem seitlichen Stützelement bei einem seitlichen Stützelement einer Längsseite unter Änderung des Abstands der Stützelemente schneller fortschreitet als bei dem anderen, wodurch Verhakungen oder dergleichen auftreten könnten. Die Querverstrebung zwischen seitlichen Stützelementen insbesondere an den Längsseiten der Tragetasche kann des Weiteren dazu dienen, eine Verbindung zu einem Fahrgestell für einen Kinderwagen, auf den die Tragetasche aufgesetzt werden kann, herzustellen. Hierzu können an der oder den Querverstrebungen Halterungselemente zur Halterung der Tragetasche auf dem Fahrgestell vorgesehen sein, beispielsweise Schrauben bzw. Klipp- und Klemmverbindungen.

Die seitlichen Stützelemente können erfindungsgemäß im aufgebauten Zustand der Tragetasche einen die Tragetasche seitlich umgebenden Stoff aufspannen. Durch das Aufspannen des Stoffs wird eine Stofftasche bzw. Stoffkonstruktion geschaffen, deren Höhe durch die Höhe der Stützelemente bzw. die Beabstandung zwischen dem oberen Rahmenabschnitt und der Bodenplatte vorgegeben ist. Dieser Bereich steht dann als Seitenwand der Tragetasche zur Verfügung. Stoff ist hierbei im weitesten Sinn als Textilelement aus natürlichen oder Kunststofffasern sowie entsprechenden Mischungen zu verstehen.

Selbstverständlich ist es auch möglich, dass eine solche Konstruktion nicht durch die seitlichen Stützelemente aufgespannt wird, sondern selbsttragend ausgebildet ist, beispielsweise als eine ziehharmonikaförmig zusammenlegbare Konstruktion oder als Plastikwanne mit starren Wänden. In einem solchen Fall ist jedoch eine separate Tragekonstruktion erforderlich bzw. die Wanne zur Aufnahme des Babys oder der Puppe ist nicht zusammenlegbar, so dass sich insgesamt ein höherer Platzbedarf ergibt bzw. zumindest eine kompliziertere Konstruktion erforderlich wird. Demgemäß ist in der Regel ein Aufbau mit einem Stoff, der durch die Stützelemente aufgespannt wird, zu bevorzugen.

Darüber hinaus kann wenigstens ein Befestigungsmittel zur Befestigung der Tragetasche an einem Fahrgestell vorgesehen sein. Dies kann beispielsweise eine Querverstrebung bzw. ein Teil einer Querverstrebung zwischen seitlichen Stützelementen sein, die bzw. der zur form- und/oder kraftschlüssigen Halterung an entsprechenden Elementen eines Fahrgestells ausgebildet ist, beispielsweise indem ein Teil der Verstrebung in eine Fahrgestellhalterung eingeklemmt wird bzw. eingeschraubt wird. Darüber hinaus ist es möglich, dass die seitlichen Stützelemente selbst bzw. die Bodenplatte über Befestigungsmittel verfügen, die eine feste Verbindung mit dem Fahrgestell herstellen können. Vorteilhafterweise wird der Befestigungsmechanismus als einfach lös- bzw. aktivierbarer Mechanismus ausgebildet, beispielsweise als Klippmechanismus oder Schiebemechanismus mit einer Rastposition.

Am oberen Rahmenabschnitt kann ein Tragebügel vorgesehen sein, der in verschiedenen Positionen arretierbar ist, insbesondere in einer Position im Wesentlichen senkrecht zum oberen Rahmenabschnitt und/oder parallel zum oberen Rahmenabschnitt. Ein solcher Tragebügel dient einem Nutzer dazu, die Tragetasche zu tragen, wozu vorteilhafterweise eine Positionsverstellung über ein Gelenkelement vorgesehen ist. Das Gelenkelement und damit der Tragebügel sind in verschiedenen Positionen arretierbar, wozu beispielsweise ein Rastmechanismus unter Verwendung von Zahnrädern oder dergleichen vorgesehen ist. Um die Tragetasche zu tragen, bietet sich eine Position des Tragebügels im Wesentlichen senkrecht zum oberen Rahmenabschnitt bzw. zur Bodenplatte an, also beispielsweise in einem Winkel von näherungsweise 90° zum oberen Rahmenabschnitt bzw. zur Bodenplatte oder aber in einem Winkel von ungefähr 80°. Zum Zusammenlegen der Tragetasche ist es vorteilhaft, wenn daneben eine Arretier- bzw. Rastposition vorgesehen ist, bei der sich der Tragebügel parallel zum oberen Rahmenabschnitt bzw. parallel zur Bodenplatte anordnet. Dies ermöglicht ein maximal flaches Zusammenlegen, wobei durch die Arretierung ein Auseinanderfallen der zusammengelegten Tasche verhindert wird. Wenn der Tragebügel dabei aufgrund seiner Länge etwas über den oberen Rahmenabschnitt hinaussteht, verbleibt in der Regel ein Winkel von einigen Grad zur Bodenplatte bzw. zum oberen Rahmenabschnitt. Es ist aber auch denkbar, dass der Tragebügel zusammenschiebbar ist bzw. von vornherein eher kurz ausgebildet ist, so dass er in der zusammengelegten Form im Innenbereich des oberen Rahmenabschnitts Platz findet, so dass ein Winkel von näherungsweise 0° zur Bodenplatte bzw. eine Lagerung parallel zur Bodenplatte realisiert werden können.

Darüber hinaus betrifft die Erfindung einen Kinder- oder Puppenwagen, der mit einer Tragetasche wie im Vorstehenden geschildert ausgebildet ist. Der Kinder- oder Puppenwagen weist somit ein Fahrgestell, in der Regel mit einem entsprechenden Schiebebügel auf, auf den die Tragetasche über einen geeigneten Befestigungsmechanismus gegebenenfalls lösbar aufgesetzt werden kann, beispielsweise durch Aufstecken, Einschieben, Einklemmen oder Festschrauben bzw. eine Kombination verschiedener Befestigungsarten.

Sollen beispielsweise mit dem Kinderwagen Gebäude aufgesucht werden, die nicht barrierefrei erreichbar sind, so kann dann die Tragetasche vom Kinder- oder Puppenwagen abgenommen und das Kind so in das entsprechende Gebäude hineingetragen werden. Für den Transport des Kinderwagens oder die Aufbewahrung bei Nichtnutzung kann die Tragetasche zusammengelegt werden, beispielsweise mit Hilfe eines Schiebemechanismus, wie er vorstehend geschildert wurde. Dadurch ist eine platzsparende Aufbewahrung des Kinderwagens möglich, insbesondere, wenn das Fahrgestell gleichfalls bzw. demontierbar zusammenlegbar ist.

Weitere Vorteile und Einzelheiten der Erfindung ergeben sich aus den folgenden Ausführungsbeispielen sowie anhand der Zeichnungen. Dabei zeigen:
- Fig. 1: einen erfindungsgemäßen Kinderwagen,
- Fig. 2: eine erfindungsgemäße Tragetasche im aufgebauten Zustand,
- Fig. 3: eine Aufsicht auf die Tragetasche der Fig. 2 im zusammengelegten Zustand,
- Fig. 4: eine Ansicht der Tragetasche der Fig. 3 von unten, und
- Fig. 5: eine Explosionsskizze zur Verdeutlichung des Zusammenlegmecha- nismus der Tragetasche der Fig. 2.

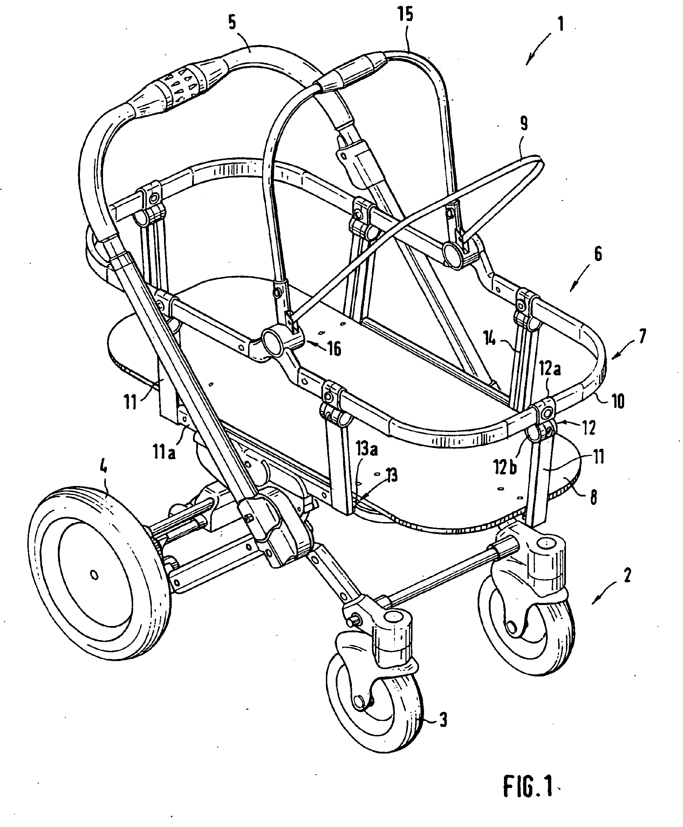

In der Fig. 1 ist ein erfindungsgemäßer Kinderwagen 1 gezeigt. Der Kinderwagen 1 weist neben einem Fahrgestell 2 mit zwei Vorderrädern 3 sowie zwei Hinterrädern 4 und einem Schiebebügel 5 eine Tragetasche 6 auf, die flach zusammengelegt werden kann.

Aus Übersichtlichkeitsgründen ist dabei lediglich das Rahmengestell 7 der Tragetasche 6 gezeigt, ohne den umgebenden Stoff im Seitenbereich sowie auf der Bodenplatte 8 und bis zur Verdeckhalterung 9, der aus Übersichtlichkeitsgründen in der Darstellung weggelassen wurde. Das Rahmengestell 7 weist einen oberen Rahmenabschnitt 10 auf, der in leichter Bauweise aus einem Leichtmetall gefertigt ist. Der obere Rahmenabschnitt 10 ist aus Ovalrohrteilen mit einem Umriss ähnlich zum Umriss der Bodenplatte 8 ausgebildet, also in einer Rechteckform mit abgerundeten Ecken.

Zwischen dem oberen Rahmenabschnitt 10 und der Bodenplatte 8 sind seitliche Stützelemente 11 vorgesehen, die Schwenkmittel 12 aufweisen, über die die Stützelemente 11 schwenkbar am oberen Rahmenabschnitt 10 angelenkt sind. Die Verschwenkung erfolgt dabei um eine im Wesentlichen zum anliegenden oberen Rahmenabschnitt 10 parallele Achse, wobei die Schwenkmittel 12 als Gelenkelement ausgebildet sind, mit einer Ovalrohraufnahme 12a zur Aufnahme des Rohrs des oberen Rahmenabschnitts 10 und dem eigentlichen Schwenkgelenk 12b.

Es sind insgesamt sechs seitliche Stützelemente 11 vorgesehen, von denen jeweils zwei an jeder Längsseite der Tragetasche 6 und jeweils eins an jeder Querseite der Tragetasche 6 angeordnet sind. Die seitlichen Stützelemente 11 der Längsseiten sind jeweils über Querstreben 11 a miteinander verbunden, die hier nicht näher dargestellte Befestigungsmittel zur Befestigung mit einem entsprechenden Abschnitt des Fahrgestells 2 aufweisen. Die Verbindung zwischen der Bodenplatte 8 und den am oberen Rahmenabschnitt 10 schwenkbar angelenkten seitlichen Stützelementen 11 wird über Verbindungsmittel 13 erreicht, die einen Teil aufweisen, der an der Unterseite der Bodenplatte 8 befestigt und hier nicht zu erkennen ist, sowie einen weiteren Teil 13a, der gegenüber der Bodenplatte 8 verschwenkbar ist und in ein entsprechenden Profil der seitlichen Stützelemente 11 eingreift, das als doppelt hinterschnittene Nut 14 ausgebildet ist. Somit bildet der Teil 13a der Verbindungsmittel 13, der in die doppelt hinterschnittene Nut 14 der seitlichen Stützelemente 11 eingreift, mit den seitlichen Stützelementen 11 einen Schiebemechanismus aus, der es bei einem Hochdrücken der Bodenplatte 8 ermöglicht, dass der Teil 13a der Verbindungsmittel 13 in Richtung des oberen Rahmenabschnitts 10 entlang einer vertikalen Achse, also in Längsrichtung der seitlichen Stützelemente 11, auf den oberen Rahmenabschnitt 10 zu bewegt wird, so dass die Beabstandung zwischen der Bodenplatte 8 und dem oberen Rahmenabschnitt 10 mit dem Hochdrücken der Bodenplatte 8 mehr und mehr verringert wird. Durch eine Verschwenkung der seitlichen Stützelemente 11 im Schwenkgelenk 12b ist es möglich, den unteren Abschnitt der seitlichen Stützelemente 11 unterhalb des Schwenkgelenks 12b in eine im Wesentlichen zur Bodenplatte 8 parallele Position unterhalb der Platte zu bringen, so dass die Tragetasche 6 des erfindungsgemäßen Kinderwagens 1 platzsparend zusammengelegt werden kann.

Hierzu ist zudem der Tragebügel 15 von der hier gezeigten Position, die im Wesentlichen senkrecht zum oberen Rahmenabschnitt 10 ist, in eine Position parallel zum oberen Rahmenabschnitt 10 bzw. parallel zur Bodenplatte 8 bringbar. Dies wird über ein Gelenk 16 des Tragebügels 15 erreicht, das eine Arretierung des Tragbügels 15 in unterschiedlichen Rastpositionen erlaubt. In das Gelenk 16 ist zudem ein Verstellmechanismus für die Verdeckhalterung 9 integriert, um das hier nicht gezeigte Verdeck zum Schutz des Kindes gegenüber Sonneneinstrahlung und Wind je nach Bedarf in unterschiedlichen Positionen zu haltern.

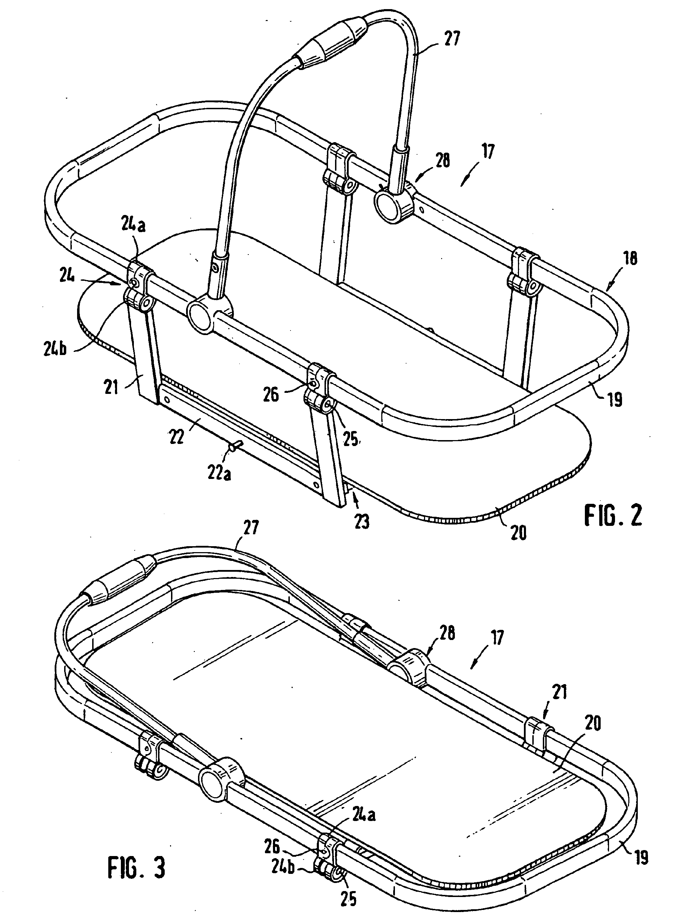

Die Fig. 2 zeigt eine erfindungsgemäße Tragetasche 17 im aufgebauten Zustand. Die Tragetasche 17 weist neben einer hier nicht dargestellten Stoffumspannung ein Rahmengestell 18 auf, bei dem ein oberer Rahmenabschnitt 19 vorgesehen ist, der aus mehreren Teilen aufgebaut ist und aus Aluminium besteht. Parallel zum oberen Rahmenabschnitt 19 und beabstandet zu diesem ist eine Bodenplatte 20 angeordnet, die durch seitliche Stützelemente 21 in einem vorgegebenen Abstand zum darüber angeordneten oberen Rahmenabschnitt 19 gehalten wird. Insgesamt sind vier seitliche Stützelemente 21 vorgesehen, wobei jeweils zwei an den Längsseiten der Tragetasche 17 mit gleichen Abständen zur Mitte der jeweiligen Längsseite angeordnet sind. Die seitlichen Stützelemente 21 einer Seite sind über Querstreben 22 miteinander verbunden, die zudem Befestigungsmittel 22a in Form von Schrauben zur Befestigung der Tragetasche 17 an einem Fahrgestell eines Kinderwagens aufweisen. Über die Querstreben 22 wird zudem eine Stabilisierung der Tragetasche 17 ermöglicht, so dass Querstreben 22 auch bei einer Tragetasche 17 zweckmäßig sein können, die nicht zur Verbindung mit einem Fahrgestell eines Kinderwagens ausgebildet ist.

Zwischen der Unterseite der Bodenplatte 20 und den seitlichen Stützelementen 21 sind hier nicht näher dargestellte Verbindungsmittel 23 vorgesehen, die die Verbindung zwischen der Bodenplatte 20 und den seitlichen Stützelementen 21 sowohl im hier dargestellten aufgebauten Zustand als auch im zusammengelegten Zustand gewährleisten. Darüber hinaus weisen die seitlichen Stützelemente 21 Gelenkelemente 24 nahe des oberen Rahmenabschnitts 19 auf, über die eine Verschwenkung eines unteren Abschnitts der seitlichen Stützelemente 21 um eine Achse parallel zum anliegenden Rohr des oberen Rahmenabschnitts 19 ermöglicht wird, so dass das seitliche Stützelement 21 nach der Verschwenkung eine horizontale Position nahezu parallel zur Ebene der Bodenplatte 20 bzw. zur inneren Ebene des oberen Rahmenabschnitts 19 aufweist. Dabei besteht das Gelenkelement 24 aus einer oberen Ovalrohraufnahme 24a, die das Ovalrohr des oberen Rahmenabschnitts 19 anliegend umgibt, nachdem sie bei der Montage auf dieses aufgeschoben wurde. Unterhalb der Ovalrohraufnahme 24a ist das eigentliche Gelenk 24b vorgesehen, das über einen Gelenkniet 25 zusammengehalten wird. Über einen weiteren Niet 26 wird die Ovalrohraufnahme 24a in ihrer Relativposition zum oberen Rahmenabschnitt 19 fixiert.

Darüber hinaus ist ein Tragebügel 27 vorgesehen, der über einen Gelenkmechanismus 28 in verschiedenen Rastpositionen relativ zum oberen Rahmenabschnitt 19 arretiert werden kann.

Die Fig. 3 zeigt eine Aufsicht auf die Tragetasche 17 der Fig. 2 im zusammengelegten Zustand. Hier sind die unteren Abschnitte der seitlichen Stützelemente 21 um das Gelenk 24b derart verschwenkt, dass die unteren Abschnitte der seitlichen Stützelemente 21 unterhalb der Bodenplatte 20 näherungsweise eine bodenparallele Position einnehmen. Der Abstand der Stützelemente 21 zur Bodenplatte 20 verkürzt sich dabei zur Mitte der Bodenplatte 20 und ist insgesamt gering. Der obere Rahmenabschnitt 19 umgibt in der zusammengelegten Position die Bodenplatte 20 mit einem gewissen Abstand, so dass der Gelenkmechanismus 28 des Tragebügels 27 im Innenraum zwischen Rahmenabschnitt 19 und Bodenplatte 20 Platz findet und sich eine flache Konstruktion ergibt. Die Höhe der zusammengelegten Konstruktion wird dabei im Wesentlichen durch die Höhe des Ovalrohrs des oberen Rahmenabschnitts 19 bestimmt. Lediglich im Bereich der seitlichen Stützelemente 21 stehen die Gelenke 24b entsprechend ihrer Höhe von wenigen Zentimetern nach unten aus der Anordnung hervor. Des Weiteren ist der Tragebügel 27 aufgrund seiner Länge nicht vollständig innerhalb des oberen Rahmenabschnitts aufgenommen. Um dies zu ändern, kann jedoch ein entsprechender Längenverstellmechanismus des Tragebügels 27 vorgesehen sein. Der Tragebügel 27 selbst weist im zusammengelegten Zustand lediglich einen geringen Winkel relativ zur Bodenplatte 20 bzw. zum oberen Rahmenabschnitt 19 auf, der unterhalb von 10° liegt bzw. bei einer entsprechenden Längenverstellbarkeit des Tragebügels 27 nahe 0° liegt.

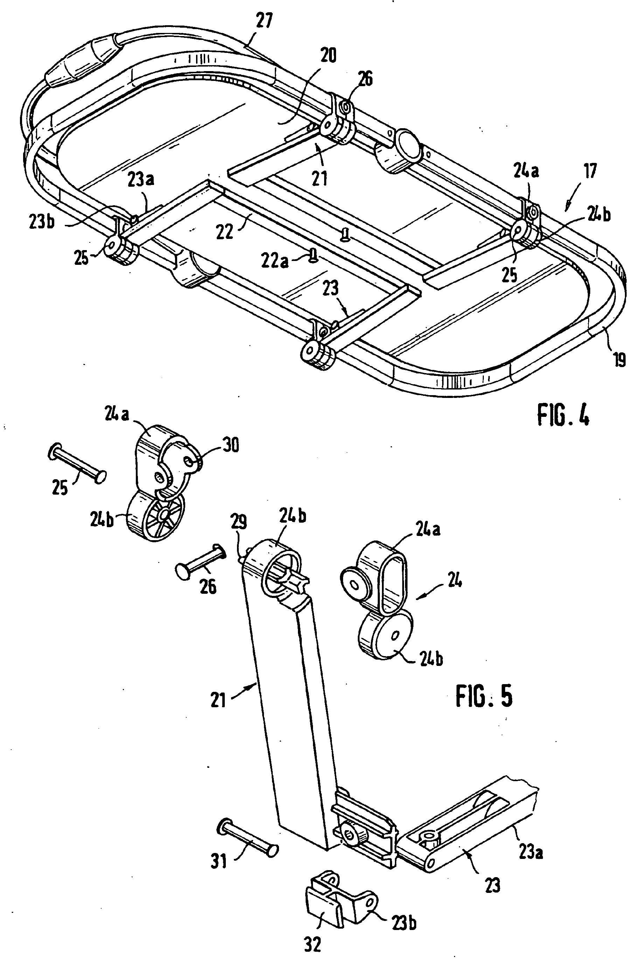

In der Fig. 4 ist eine Ansicht der Tragetasche 17 der Fig. 3 von unten dargestellt, wobei nun der obere Rahmenabschnitt 19 und die Bodenplatte 20 jeweils von ihrer Unterseite zu sehen sind. Die seitlichen Stützelemente 21, die jeweils an einer Längsseite der Tragetasche 17 über die Querstreben 22 verbunden angeordnet sind, liegen in einer im Wesentlichen bodenparallelen Position an der Unterseite der Bodenplatte 20 an, wobei sie sich im Bereich des oberen Rahmenabschnitts 19 in einem größeren Abstand im Zentimeterbereich zur Bodenplatte 20 befinden, bedingt durch das Gelenk 24b, das unterhalb der Ovalrohraufnahme 24a angeordnet ist. Von dieser Position mit größerem Abstand zur Bodenplatte 20 verlaufen die seitlichen Stützelemente 21 zum mittleren Bereich der Bodenplatte 20 hin auf die Bodenplatte 20 zu und liegen im Endbereich an dieser an, wobei sie durch die Verbindungsmittel 23, die mit den seitlichen Stützelementen 21 einen Schiebemechanismus ausbilden, in ihrer bodennahen Position gehalten werden.

Gegebenenfalls kann zusätzlich zur Fixierung bzw. Arretierung der seitlichen Stützelemente 21 an der Bodenplatte 20 ein Arretiermittel vorgesehen sein, beispielsweise in Form einer Halterung mit einem vorspringenden Abschnitt, die im Endbereich der seitlichen Stützelemente 21 auf der Bodenplatte 20 so montiert ist, dass die seitlichen Stützelemente 21 im zusammengelegten Zustand der Tragetasche 17 unter den Vorsprung greifen und demgemäß nicht ohne Lösen der Halterung von der Bodenplatte 20 aus betrachtet nach unten wegschwenken können. Die Verbindungsmittel 23 bilden ein Schiebeelement aus, das aus einem Strebenelement 23a besteht, das auf der Unterseite der Bodenplatte 20 befestigt ist und sich von einem Randbereich der Bodenplatte zur Mitte hin erstreckt, sowie aus einem Profilgleiter 23b zum Eingreifen in eine hier nicht zu erkennende doppelt hinterschnittene Nut der seitlichen Stützelemente 21.

In der Fig. 5 ist eine Explosionsskizze zur Verdeutlichung des Zusammenlegmechanismus der Tragetasche 17 der Fig. 2 dargestellt. Gezeigt ist ein seitliches Stützelement 21 mit einem oberen Gelenkelement 24, das eine zweiteilige Ovalrohraufnahme 24a aufweist, die über ein Ovalrohr des oberen Rahmenabschnitts 19 aufgeschoben wird. Unterhalb der Ovalrohraufnahme 24a ist das eigentliche Gelenk 24b vorgesehen, das aus einem mittleren Abschnitt oben am unteren Teil des seitlichen Stützelements 21 mit seitlichen Vorsprüngen 29 sowie einem linken und rechten Abschnitt besteht, wobei diese seitlichen Abschnitte jeweils auf die Vorsprünge 29 des mittleren Abschnitts des Gelenks 24b aufgeschoben werden. Das Aufschieben wird über einen Niet 25 gesichert, der gleichzeitig die Schwenkachse zur Verschwenkung des unteren Teils des seitlichen Stützelements 21 relativ zum am oberen Rahmenabschnitt befestigten Teil in Form der Ovalrohraufnahme 24a mit den Gelenkbestandteilen des Gelenks 24b, die jeweils fest an der Ovalrohraufnahme 24a befestigt sind, bildet.

Ein weiterer Niet 26 wird durch entsprechende Öffnungen 30 der Ovalrohraufnahme 24a geführt und dient der Halterung derselben am oberen Rahmenabschnitt 19, so dass die Ovalrohraufnahme 24a verschiebsicher gegenüber dem oberen Rahmenabschnitt 19 gelagert ist.

Daneben sind die Verbindungsmittel 23 dargestellt, die aus dem auf der Unterseite der hier nicht dargestellten Bodenplatte 20 befestigten Strebenelement 23a sowie einem Profilgleiter 23b bestehen, der über einen weiteren Niet 31, der das Strebenelement 23 quer durchgreift, schwenkbar an dem Strebenelement 23a gehaltert ist. Damit wird eine Verschwenkbarkeit dieses Abschnitts der Verbindungsmittel 23 relativ zur Bodenplatte 20, und zwar um eine Achse parallel anliegenden zum Rand der Bodenplatte 20, erreicht. Dabei wird ein Schiebemechanismus mit dem seitlichen Stützelement 21 derart ausgebildet, dass das T-Profil 32 des Profilgleiters 23b in die hier nicht zu erkennende Nut des seitlichen Stützelements 21, die entsprechend als doppelt hinterschnittene Nut ausgebildet ist, eingreift. Dadurch wird der Profilgleiter 23b relativ zur Längsrichtung des seitlichen Stützelements 21 auf den oberen Rahmenabschnitt 19 zu bewegt. Durch das gleichzeitige Verschwenken des seitlichen Stützelements 21 um die durch den Niet 25 vorgegebene Achse werden zudem die seitlichen Stützelemente 21 in eine bodenparallele Position derart gebracht, dass sie direkt über den Strebenelementen 23a mit einer leichten Neigung, jedoch im Wesentlichen parallel zur Bodenplatte 20, verlaufen. Hierzu sind die Strebenelemente 23a hinsichtlich ihrer Form an die im zusammengelegten Zustand anliegenden unteren Abschnitte der seitlichen Stützelemente 21 angepasst.

So lässt sich die erfindungsgemäße Tragetasche bzw. die Tragetasche des erfindungsgemäßen Kinder- oder Puppenwagens durch ein einfaches Hochdrücken einer Bodenplatte in einer platzsparenden Form zusammenlegen, wobei dieses Zusammenlegen über einen Schiebemechanismus bzw. einen vergleichbaren Mechanismus realisiert wird, ohne dass weitere Elemente derart zu lösen wären, dass sich separate Einzelelemente ohne eine Verbindung zur Gesamtkonstruktion ergeben. In Kombination mit der Verwendung leichter Materialien für das Rahmengestell ergibt sich so eine leichte flache Konstruktion, die einfach mitgeführt werden kann. Zum erneuten Aufbau ist die Konstruktion lediglich, gegebenenfalls nach dem Lösen einer Arretierung, wieder auseinander zu schieben, indem der Boden nach unten gedrückt wird, woraufhin die seitlichen Stützelemente wieder eine im Wesentlichen senkrechte Position einnehmen und den Abstand zwischen dem oberen Rahmenabschnitt und dem Boden gewährleisten.

## Patentansprüche

1. Tragetasche für ein Kind oder eine Puppe mit einem Rahmengestell und einer Bodenplatte, wobei mehrere seitliche Stützelemente (11, 21) zur Beabstandung der unteren Bodenplatte (8, 20) von einem oberen, im Wesentlichen bodenparallelen Rahmenabschnitt (10, 19) in einem aufgebauten Zustand der Tragetasche (6, 17) vorgesehen sind, **dadurch gekennzeichnet, dass** die seitlichen, am Rahmenabschnitt schwenkbar angelenkten Stützelemente (11, 21) zum flachen Zusammenlegen der Tragetasche (6, 17) durch Hochdrücken der Bodenplatte (8, 20) jeweils mit Hilfe von Verbindungsmitteln (13, 23) zwischen der Unterseite der Bodenplatte (8, 20) und den Stützelementen (11, 21) in eine im Wesentlichen bodenparallele Position unterhalb der Bodenplatte (8, 20) bringbar sind.

2. Tragetasche nach Anspruch 1, **dadurch gekennzeichnet, dass** wenigstens ein seitliches Stützelement (11, 21) ein nahe am oberen Rahmenabschnitt (10, 19) vorgesehenes Schwenkmittel (12) in Form eines Gelenkelements (24) zur Anlenkung am Rahmenabschnitt (10, 19) aufweist, mittels dem ein unterer Teil des Stützelements (11, 21) zum Zusammenlegen um eine im Wesentlichen zum anliegenden Rahmenabschnitt (10, 19) parallele Achse in die bodenparallele Position verschwenkbar ist.

3. Tragetasche nach einem der vorangehenden Ansprüche, **dadurch gekennzeichnet, dass** die Verbindungsmittel (13, 23) zur Ausbildung eines Schiebemechanismus mit einem seitlichen Stützelement (11, 21) wenigstens ein Schiebeelement aufweisen, das schwenkbar an der Unterseite der Bodenplatte (8, 20) angelenkt und zum Zusammenlegen mit dem seitlichen Stützelement (11, 21) in Richtung zum oberen Rahmenabschnitt (10, 19) verschiebbar verbunden ist.

4. Tragetasche nach Anspruch 3, **dadurch gekennzeichnet, dass** das Schiebeelement einen Profilgleiter (23b) zum Eingreifen in ein Profil des seitlichen Stützelementes (11, 21) und ein auf der Unterseite der Bodenplatte (8, 20) befestigtes, insbesondere strebenförmiges, Halterungselement (23a) aufweist, mit dem der Profilgleiter (23b) um eine parallel zum anliegenden Rand der Bodenplatte (8, 20) angeordnete Achse schwenkbar verbunden ist.

5. Tragetasche nach Anspruch 3 oder 4, **dadurch gekennzeichnet, dass** das seitliche Stützelement (11, 21) zur Ausbildung des Schiebemechanismus ein Profil zur wenigstens teilweisen Aufnahme des Schiebeelements, insbesondere eines Profilgleiters (23b), aufweist.

6. Tragetasche nach Anspruch 5, **dadurch gekennzeichnet, dass** das Profil des seitlichen Stützelements (11, 21) als doppelt hinterschnittene Nut (14) zur Aufnahme eines darin geführten T-förmigen Gegenprofils des Schiebeelements, insbesondere des Profilgleiters (23b), ausgebildet ist.

7. Tragetasche nach einem der vorangehenden Ansprüche, **dadurch gekennzeichnet, dass** für die Längsseiten und/oder für die Querseiten der Tragetasche (6, 17) jeweils wenigstens ein seitliches Stützelement (11, 21) vorgesehen ist, insbesondere jeweils zwei seitliche Stützelemente (11, 21) an den Längsseiten oder jeweils zwei seitliche Stützelemente (11, 21) an den Längsseiten und jeweils ein seitliches Stützelement (11, 21) an den Querseiten.

8. Tragetasche nach einem der vorangehenden Ansprüche, **dadurch gekennzeichnet, dass** wenigstens ein Stützelement (11, 21) als Strebe, insbesondere als schräg von der Bodenplatte weg nach oben außen verlaufende Strebe, ausgebildet ist.

9. Tragetasche nach einem der vorangehenden Ansprüche, **dadurch gekennzeichnet, dass** Arretiermittel zum Arretieren der seitlichen Stützelemente im aufgebauten und/oder zusammengelegten Zustand der Tragetasche vorgesehen sind.

10. Tragetasche nach einem der vorangehenden Ansprüche, **dadurch gekennzeichnet, dass** mehrere seitliche Stützelemente (11, 21) zur Stabilisierung über wenigstens eine Querverstrebung (11a, 22) miteinander verbunden sind.

11. Tragetasche nach einem der vorangehenden Ansprüche, **dadurch gekennzeichnet, dass** die seitlichen Stützelemente (11, 21) im aufgebauten Zustand der Tragetasche (6, 17) einen die Tragetasche (6, 17) seitlich umgebenden Stoff aufspannen.

12. Tragetasche nach einem der vorangehenden Ansprüche, **dadurch gekennzeichnet, dass** wenigstens ein Befestigungsmittel zur Befestigung der Tragetasche an einem Fahrgestell (2) vorgesehen ist.

13. Tragetasche nach einem der vorangehenden Ansprüche, **dadurch gekennzeichnet, dass** am oberen Rahmenabschnitt (10, 19) ein Tragebügel (15, 27) vorgesehen ist, der in verschiedenen Positionen arretierbar ist, insbesondere in einer Position im Wesentlichen senkrecht zum oberen Rahmenabschnitt (10, 19) und/oder parallel zum oberen Rahmenabschnitt (10, 19).

14. Kinder- oder Puppenwagen (1), ausgebildet mit einer Tragetasche (6, 17) nach einem der vorangehenden Ansprüche.

## Claims

1. A carrying bag for a child or a doll with a frame component and a base panel, wherein several lateral supporting elements (11, 21) are provided for spacing the lower base panel (8, 20) from an upper frame portion (10, 19) disposed substantially parallel to the base in an extended condition of the carrying bag (6, 17),
**characterised in that**,
in order to fold flat the carrying bag (6, 17), the lateral supporting elements (11, 21) connected to the frame portion in a pivotally articulated manner can be brought, by pushing the base panel (8, 20) upwards in each case with the assistance of connecting means (13, 23) between the underside of the base panel (8, 20) and the supporting elements (11, 21), into a position substantially parallel to the base below the base panel (8, 20).

2. The carrying bag according to claim 1,
**characterised in that**
at least one lateral supporting element (11, 21) comprises a pivoting means (12) provided close to the upper frame portion (10, 19) in the form of an articulated element (24) for the articulated connection of the frame portion (10, 19), by means of which a lower part of the supporting element (11, 21) can be pivoted about an axis substantially parallel to the adjacent frame portion (10, 19) for the folding together into a position parallel to the base.

3. The carrying bag according to any one of the preceding claims,
**characterised in that**,
in order to form a slide mechanism with a lateral supporting element (11, 21), the connecting means (13, 23) provide at least one slide element, which is connected in a pivotally articulated manner to the underside of the base panel (8, 20) and, for the folding together, connected to the lateral supporting element (11, 21) in a manner displaceable in the direction towards the upper frame portion (10, 19).

4. The carrying bag according to claim 3,
**characterised in that**
the slide element provides a profiled slider (23b) for engagement in a profile of the lateral supporting element (11, 21) and a holding element (23a) attached to the underside of the base panel (8, 20), especially in the form of a stay, with which the profiled slider (23b) is connected in a pivoting manner about an axis arranged parallel to the adjacent edge of the base panel (8, 20).

5. The carrying bag according to claim 3 or 4,
**characterised in that**,
for the formation of the slide mechanism, the lateral supporting element (11, 21) provides a profile for the at least partial accommodation of the slide element, especially of a profiled slider (23b).

6. The carrying bag according to claim 5,
**characterised in that**
the profile of the lateral supporting element (11, 21) is formed as a double undercut groove (14) for the accommodation of a T-shaped counter profile of the slide element guided therein, especially of the profiled slider (23b).

7. The carrying bag according to any one of the preceding claims,
**characterised in that**
at least one lateral supporting element (11, 21) is provided respectively for the longitudinal sides and/or for the transverse sides of the carrying bag (6, 17), especially, respectively two lateral supporting elements (11, 21) on the longitudinal sides or respectively two lateral supporting elements (11, 21) on the longitudinal sides and respectively one lateral supporting element (11, 21) on the transverse sides.

8. The carrying bag according to any one of the preceding claims,
**characterised in that**
at least one supporting element (11, 21) is formed as a stay, especially a stay extending diagonally upwards and outwards away from the base panel.

9. The carrying bag according to any one of the preceding claims,
**characterised in that**
locking means are provided for locking the lateral supporting elements in the expanded and/or folded condition of the carrying bag.

10. The carrying bag according to any one of the preceding claims,
**characterised in that**
several lateral supporting elements (11, 21) are connected to one another via at least one transverse stay (11a, 22) for stabilisation.

11. The carrying bag according to any one of the preceding claims,
**characterised in that**,
in the expanded condition of the carrying bag (6, 17), the lateral supporting elements (11, 21) stretch a fabric laterally surrounding the carrying bag (6, 17).

12. The carrying bag according to any one of the preceding claims,
**characterised in that**
at least one fastening means is provided for fastening the carrying bag to a chassis (2).

13. The carrying bag according to any one of the preceding claims,
**characterised in that**
a carrying handle (15, 27), which can be locked in different positions, especially in a position substantially perpendicular to the upper frame portion (10, 19) and/or parallel to the upper frame portion (10, 19), is provided on the upper frame portion (10, 19).

14. A child's or doll's pushchair (1), formed with a carrying bag (6, 17) according to any one of the preceding claims.

## Revendications

1. Nacelle portable pour un bébé ou une poupée, comportant un châssis et une plaque de fond, sachant que plusieurs éléments de support (11, 21) latéraux sont prévus pour que, dans une position dépliée de la nacelle portable (6, 17), la plaque de fond (8, 20) soit maintenue à distance d'un cadre (10, 19) supérieur sensiblement parallèle au fond, **caractérisée en ce que**, pour le pliage à plat de la nacelle portable (6, 17) par une poussée vers le haut de la plaque de fond (8, 20), les éléments de support (11, 21) latéraux, articulés de manière pivotante contre le cadre, peuvent être amenés chacun, par des moyens d'assemblage (13, 23) entre la face inférieure de la plaque de fond (8, 20) et les éléments de support (11, 21), dans une position sensiblement parallèle au fond, en dessous de la plaque de fond (8, 20).

2. Nacelle portable selon la revendication 1, **caractérisée en ce qu'**au moins un élément de support (11, 21) latéral comporte un moyen de pivotement (12) en forme d'élément articulé (24) pour l'articulation contre le cadre (10, 19), lequel est prévu sur le cadre (10, 19) supérieur et au moyen duquel une partie inférieure de l'élément de support (11, 21) peut pivoter, en vue du pliage, dans la position parallèle au fond autour d'un axe sensiblement parallèle au cadre (10, 19) adjacent.

3. Nacelle portable selon l'une quelconque des revendications précédentes, **caractérisée en ce que** les moyens d'assemblage (13, 23) comportent, pour former un mécanisme de coulissement avec un élément de support (11, 21) latéral, au moins un élément coulissant qui est articulé de manière pivotante à la face inférieure de la plaque de fond (8, 20) et, en vue du pliage, est relié à l'élément de support (11, 21) latéral de manière à coulisser vers le cadre (10, 19) supérieur.

4. Nacelle portable selon la revendication 3, **caractérisée en ce que** l'élément coulissant comporte une coulisse profilée (23b), destiné à s'engager dans un profil de l'élément de support (11, 21), et un élément de fixation (23a), en particulier en forme d'entretoise, qui est fixé sur la face inférieure de la plaque de fond (8, 20) et avec lequel la coulisse profilée (23b) est assemblée de manière à pouvoir pivoter autour d'un axe disposé parallèlement par rapport au bord adjacent de la plaque de fond (8, 20).

5. Nacelle portable selon la revendication 3 ou 4, **caractérisée en ce que** l'élément de support (11, 21) latéral, en vue de former le mécanisme de coulissement, comporte un profilé destiné à recevoir au moins partiellement l'élément coulissant, en particulier une coulisse profilée (23b).

6. Nacelle portable selon la revendication 5, **caractérisée en ce que** le profil de l'élément de support (11, 21) latéral est réalisé sous la forme d'une rainure (14) à double détalonnage, destinée à recevoir un profil complémentaire en forme de T, guidé dans celle-ci, de l'élément coulissant, en particulier de la coulisse profilée (23b).

7. Nacelle portable selon l'une quelconque des revendications précédentes, **caractérisée en ce que** pour les côtés longitudinaux et/ou les côtés transversaux de la nacelle portable (6, 17), il est prévu respectivement au moins un élément de support (11, 21) latéral, en particulier respectivement deux éléments de support (11, 21) latéraux sur les côtés longitudinaux ou respectivement deux éléments de support (11, 21) latéraux sur les côtés longitudinaux et respectivement un élément de support (11, 21) latéral sur les côtés transversaux.

8. Nacelle portable selon l'une quelconque des revendications précédentes, **caractérisée en ce qu'**au moins un élément de support (11, 21) est réalisé sous forme d'entretoise, en particulier sous forme d'entretoise orientée en oblique à partir de la plaque de fond vers l'extérieur en haut.

9. Nacelle portable selon l'une quelconque des revendications précédentes, **caractérisée en ce qu'**il est prévu des moyens de blocage pour immobiliser les éléments de support latéraux dans la position dépliée et/ou pliée de la nacelle portable.

10. Nacelle portable selon l'une quelconque des revendications précédentes, **caractérisée en ce que** plusieurs éléments de support (11, 21) latéraux sont reliés entre eux par l'intermédiaire d'au moins une traverse (11a, 22) en vue d'une stabilisation.

11. Nacelle portable selon l'une quelconque des revendications précédentes, **caractérisée en ce que** les éléments de support (11, 21) latéraux, dans la position dépliée de la nacelle portable (6, 17), tendent un tissu entourant latéralement la nacelle portable (6, 17).

12. Nacelle portable selon l'une quelconque des revendications précédentes, **caractérisée en ce qu'**il est prévu au moins un moyen de fixation pour fixer la nacelle portable sur un châssis de roulement (2).

13. Nacelle portable selon l'une quelconque des revendications précédentes, **caractérisée en ce que** sur le cadre (10, 19) supérieur est prévu un étrier en forme d'anse (15, 27), qui peut être immobilisé dans différentes positions, en particulier dans une position sensiblement perpendiculaire au cadre (10, 19) supérieur et/ou parallèle au cadre (10, 19) supérieur.

14. Poussette (1) pour bébé ou poupée, réalisée avec une nacelle portable (6, 17) selon l'une quelconque des revendications précédentes.
